# EUROPEAN PATENT SPECIFICATION

(11) **EP 2 276 223 B1**
(45) Date of publication and mention of the grant of the patent: **22.08.2012**
(21) Application number: 10182471.2
(22) Date of filing: 04.04.2006
(51) Int. Cl.: H04L 29/12, H04L 12/26

(54) **Method and apparatus for detecting a router that improperly responds to ARP requests**
Benutzung einer Testbotschaft zur Feststellung ob ein Netzwerkgerät einen Fehler aufweisst
Utilisation d'une sonde pour constater si un dispositif de réseau fonctionne incorrectement

(30) Priority: 04.04.2005 US 98135
(43) Date of publication of application: 19.01.2011
(62) Divisional of application: 06740671.0
(73) Proprietor: Apple Inc., Cupertino, CA 95014 (US)
(72) Inventor: Graessley, Joshua, Sunnyvale, CA 94085 (US); Cheshire, Stuart, San Jose, CA 95126 (US)
(74) Representative: Barnfather, Karl Jon

(56) References cited:
- US-A- 5 708 654
- US-A- 5 724 510
- STUART CHESHIRE APPLE COMPUTER BERNARD ABOBA MICROSOFT CORPORATION ERIK GUTTMAN SUN MICROSYSTEMS: "Dynamic Configuration of IPv4 Link-Local Addresses; draft-ietf-zeroconf-ipv4-linklocal-17.txt; ", 8 July 2004 (2004-07-08), IETF STANDARD-WORKING-DRAFT, INTERNET ENGINEERING TASK FORCE, IETF, CH, XP015039152, ISSN: 0000-0004 * paragraph [0001] - paragraph [0003] *

## Description

### BACKGROUND

### Related Art

In order to participate in an Internet Protocol (IP) network, a network node, such as a computer or a printer, needs to be configured with an IP address. Additionally, in order: communicate with another device using IP over Ethernet or similar media, the network node needs the ability to translate an IP address for the device into the corresponding hardware (e.g. Ethernet) address for the device. The Address Resolution Protocol (ARP) solves this translation problem by providing an address-resolution mechanism which determines the hardware address for a given IP address, thereby enabling a network node to participate in an IP network.

IP addresses can be configured either manually by the user, or automatically with the help of another network node, such as a DHCP server. Unfortunately, a DHCP server may not always be available. Furthermore, it is cumbersome to have the user configure an IP address. Therefore, there is a strong need for a configuration mechanism by which a network node can automatically configure an IP address on its own.

IPv4 Link-local addressing (RFC 3927) provides such a configuration mechanism. In IPv4 link-local addressing, a configuration mechanism within a network node randomly picks a "candidate" IP address in a specified link-local address range and sends an ARP request to check whether the candidate link-local IP address is unique within the scope of the link. If the candidate link-local IP address is already in use by another network node, then the configuration mechanism picks another link-local IP address and checks whether that is unique. Once the configuration mechanism finds a unique link-local IP address, the network node uses it to communicate with other nodes in the network.

Unfortunately, some network routers are misconfigured to respond to all ARP requests, including ARP requests for any link-local IP address. If such a router is attached to a local network, it can interfere with the configuration mechanism by responding to ARP requests sent by the configuration mechanism, making it appear as if every single possible address is already in use. This can prevent the configuration mechanism from selecting an IP address.

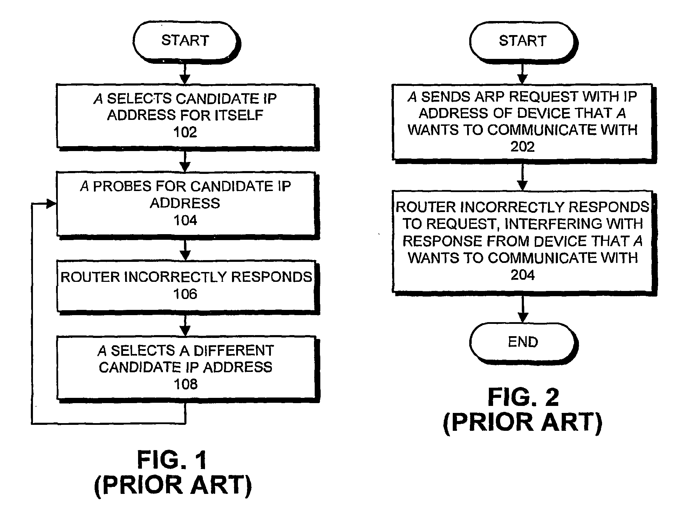

For example, FIG. 1 illustrates how a router can interfere with the process of assigning an IP address. During operation, node *A* selects a candidate IP address (step 102). Next, node A probes for the candidate IP address by performing an ARP request (step 104). The interfering router then responds to the ARP request (step 106). This causes node A to infer that another node already has the IP address, and to select a different candidate IP address (step 108). The system then returns to step 104 and the process repeats indefinitely. Consequently, node A is unable to assign an IP address.

Note that if such a router is configured to ignore ARP "probes," which are sent by a device that is attempting to assign a link-local IP address, the router can still interfere with normal (non-probe) ARP requests, which are sent to determine an Ethernet address associated with an IP address.

For example, FIG. 2 illustrates how a router can interfere with normal ARP requests. First, a node A sends an ARP request with the IP address of a device that node *A* wants to communicate with (step 202). Next, a router incorrectly responds to the ARP request, interfering with the response from the actual device that node *A* wants to communicate with (step 204). This causes node *A* to obtain the wrong Ethernet address. IP packets are subsequently sent to the router instead of to the desired device, where they are lost because the router either forwards them incorrectly, or simply discards them without forwarding at all.

Hence, what is needed is a method and an apparatus for handling the above-described problems encountered while performing ARP requests.

In a related problem, Internet Service Providers (ISPs) typically provide a single Internet Protocol (IP) address per Internet connection account, which would conventionally imply that only one Internet-enabled device per account can be coupled to the ISP's network at any given time. This is unfortunate, given that today many households have multiple computers and other Internet-enabled devices that the customer may desire to have connected to the ISP's network concurrently.

A common solution to this Internet connection-sharing problem is to use a Network Address Translation (NAT) device (commonly called a "home gateway") to share a single IP address with multiple Internet-enabled devices, which are coupled to the home gateway through a local area network (LAN). The home gateway device typically has at least two physical interfaces and two Internet addresses: a public one that is used to communicate with the ISP's network, and a private internal one that is used to communicate with devices on the LAN. From the point of view of an outside observer, all the customer's local computers and other Internet-enabled devices are made to appear as a single device with a single public IP address.

If the home gateway is configured to offer Dynamic Host Configuration Protocol (DHCP) service to the customer's devices, the home gateway usually assigns a private IP address to each Internet-enabled device coupled to the home gateway. The home gateway also provides its own LAN IP address to these Internet-enabled devices as both the default gateway to which they should send outbound IP packets, and the default DNS server to which they should send DNS queries. Since usually the home gateway is not, itself, authoritative for any DNS domains, all it does with received DNS queries is forward them on to a more knowledgeable DNS server elsewhere, typically one operated by the customer's ISP.

When communicating with services on the Internet, a client device sends IP packets via the home gateway. The home gateway rewrites the source IP address in each packet to be the common shared public IP address, and then forwards it through the ISP's network to the Internet. During this process, the home gateway typically keeps track of which packet was sent by which local Internet-enabled device, so that when response packet(s) return from the Internet via the ISP's network to the home gateway, the home gateway is able to route those response packets to the appropriate Internet-enabled device that originated the corresponding outgoing request packet.

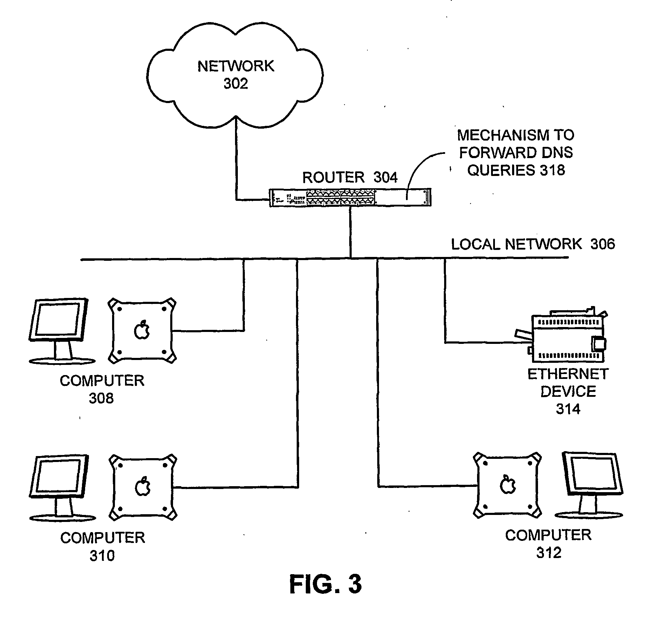

For example, FIG. 3 illustrates a home gateway 304, which is coupled both to network 302 and local network 306. Local network 306 couples home gateway 304 with computers 308, 310, and 312, and Ethernet device 314.

A home gateway (or any other Internet sharing device) such as home gateway 304, typically includes a mechanism for forwarding DNS queries to DNS servers which can provide answers to the DNS queries. This mechanism allows home gateway 304 to function as the default "configured DNS server" for all devices on local network 306.

Note that a "configured DNS server" can include any DNS-enabled device which can return a response to a DNS query, such as (1) an authoritative DNS server, (2) a recursive DNS server, and (3) a forwarding DNS server. An authoritative DNS server answers DNS queries directed to a domain or a set of domains that have been delegated to the authoritative DNS server. In doing so, the authoritative DNS server maintains DNS records for the delegated domain or set of domains, and is the only type of DNS server that can answer authoritatively for the delegated domain or set of domains.

A recursive DNS server (a DNS cache) receives DNS queries, and performs queries to lookup the requested domain. When an answer is received from an authoritative DNS server or from another recursive DNS server, the recursive DNS server caches the answer in its local DNS cache. If a query is made for a DNS record which was previously-cached in the local DNS cache, the recursive DNS server uses the cached information to answer the DNS query instead of performing another DNS query.

A forwarding DNS server (a DNS relay) forwards DNS queries to either a recursive DNS server or to an authoritative DNS server. As mentioned above, home gateways typically contain simple DNS relays, which function as the "con figured DNS server" for local devices that communicate through the home gateway.

Although home gateways are typically able to enable multiple Internet-enabled devices to share a single Internet connection successfully, some of these home gateways have software bugs or similar design flaws. One such flaw causes the home gateway to incorrectly handle the forwarding of valid DNS queries to DNS servers. Furthermore, such flawed home gateways can crash and completely cease functioning when processing certain valid DNS queries, thereby disrupting their ability to perform their intended function, namely providing Internet access to local computers and similar Internet-enabled devices.

Hence, what is needed is a method and an apparatus for a client on the local network to determine if its DNS server suffers from this particular known software bug so that the client can determine when it should avoid performing those certain valid DNS queries that are known to have a high likelihood of crashing that particular device.
Document US5708654 describes a method for detection of routers running proxy ARP for the default route by issuing a single ARP command for a unique remote host. Because the target IP address chosen as a unique, non-existent device, the router will respond to the ARP request with a proxy ARP reply for its default route if this function is enabled.

### SUMMARY

According to claim 1 the present invention provides a method for detecting a device such as a router that incorrectly responds to address-resolution-protocol (ARP) probes, comprising: in a network node: sending a first ARP probe for a link-local IP address wherein the link-local IP address is an IP address to be assigned, selected from a specified range of IP addresses when a response is received to the first ARP probe, sending a second ARP probe for a reserved link-local IP address which should not be assigned to any device; and when a response is received to the second ARP probe, placing the source address of the response on a black list recording an identity of a responding device and ignoring subsequent ARP responses from the responding device. A corresponding computer-readable storage medium and apparatus are in claims 5 and 9 respectively.

In a variation on this embodiment, the reserved link-local IP address is the broadcast address 169.254.255.255 and/or 169.254.0.0.

If it is determined that the response is from a non-compliant router, the system places the source address for the non-compliant router on a black list pertaining to the specific IP address range in question (e.g. 169.254/16). The system then ignores subsequent ARP responses pertaining to that address range when they come from source addresses in the black list, so that subsequent incorrect ARP responses from the noncompliant router will be ignored.

In a variation on this embodiment, optionally the ARP request is an ARP probe, which is sent by a requesting device that is in the process of assigning itself a link-local IP address.

In a further variation, optionally prior to sending the ARP request, the requesting device selects a candidate link-local IP address, and sends an initial ARP probe for the candidate link-local IP address. Only if a response is received to the initial ARP probe does the requesting device send the ARP probe (with the reserved link-local IP address) to determine if a non-compliant router may have responded to the initial ARP probe.

In a variation on this embodiment, if the ARP probe with the reserved link-local IP address is not responded to, the requesting device assigns the candidate link-local IP address.

In a variation on this embodiment, the ARP request is a normal ARP request (not an ARP probe). If no response is received to the ARP request, or if a response is received from a non-compliant router and the source address for the non-compliant router is placed on a black list, the system then sends a subsequent ARP request for a valid link-local IP address to determine an Ethernet address associated with the valid link-local IP address.

One exemplary embodiment of the present invention provides a system that determines if a DNS server suffers from a particular known software bug or similar design flaw. During operation, the system sends a special query to the DNS server, wherein the special query is constructed to detect the existence of a flaw in the DNS server without crashing it. Next, the system receives an answer to the special query from the DNS server. If the DNS server gives an incorrect answer this indicates that a flaw exists and the system takes note of this fact, so that it can avoid performing those certain valid DNS queries that are known to have a high likelihood of crashing that particular home gateway.

In a variation on this exemplary embodiment, if the answer does not indicate that a flaw exists, the system concludes that the DNS server does not have the flaw that the special query was constructed to detect.

In a variation on this exemplary embodiment, the DNS server can include: a DNS server, a DNS cache, or a DNS relay.

In a further variation, the special query is constructed so as to not cause the DNS server to communicate with a DNS root name server whether or not the flaw exists.

In a further variation, the special query is a "reverse-lookup" DNS query for a name that is a sub domain of the "reverse-lookup" DNS name for the IP loopback address.

In a further variation, the "reverse-lookup" DNS query has the following format "1.0.0. 127.dnsbugtest. 1.0.0. 1 27.in-addr.arpa. "

In a further variation, if the answer to the special query indicates that a domain name specified in the special query does not exist, the system concludes that the DNS server does not have the flaw that the special query was constructed to detect.

In a variation on this embodiment, the system performs the remedial action by disabling a networking feature in an application that communicates with the DNS server.

In a further variation, the networking feature is Wide Area Bonjour, which allows clients to discover network services on a network.

### BRIEF DESCRIPTION OF THE FIGURES

FIG. 1 presents a flow chart illustrating how a router can interfere with the process of assigning an IP address.

FIG. 2 presents a flow chart illustrating how a router can interfere with a normal ARP request.

FIG. 3 illustrates a networked computer system in accordance with an embodiment of the present invention.

FIG. 4 presents a flow chart illustrating the process of assigning an IP address in accordance with an embodiment of the present invention.

FIG. 5 presents a flow chart illustrating the process of performing an ARP request in accordance with an embodiment of the present invention.

FIG. 6 presents a flow chart illustrating the process of determining if a DNS server suffers from a particular known software bug or similar design flaw in accordance with an embodiment of the present invention.

### DETAILED DESCRIPTION

The following description is presented to enable any person skilled in the art to make and use the invention, and is provided in the context of a particular application and its requirements. Various modifications to the disclosed embodiments will be readily apparent to those skilled in the art, and the general principles defined herein may be applied to other embodiments and applications without departing from the scope of the present invention. Thus, the present invention is not limited to the embodiments shown, but is to be accorded the widest scope consistent with the principles and features disclosed herein.

The data structures and code described in this detailed description are typically stored on a computer-readable storage medium, which may be any device or medium that can store code and/or data for use by a computer system. This includes, but is not limited to, magnetic and optical storage devices, such as disk drives, magnetic tape, CDs (compact discs) and DVDs (digital versatile discs or digital video discs), and computer instruction signals embodied in a transmission medium (with or without a carrier wave upon which the signals are modulated). For example, the transmission medium may include a communications network, such as a LAN, a WAN, or the Internet.

### Networked Computer System

FIG. 3 illustrates a networked computer system 300 in accordance with an embodiment of the present invention. Networked computer system 300 includes a local network 306, which couples together computers 308, 310 and 312, a router 304 and an Ethernet device 314. Local network 306 can include any type of computer network, such as an Ethernet. Computers 308, 310 and 312 can include any type of network device which can perform an ARP request. Ethernet device 314 can include any type of device (such as a printer) that a node (such as computer 308) wants to communicate with.

Router 304 is a device that couples local network 306 to a network 302, such as the Internet. However, in this system, router 304 is a "non-compliant" router that can potentially interfere with ARP requests performed by a computer 308. For example, router 304 can interfere with ARP probes performed during the process assigning a link-local IP address, or with ARP requests performed to identify an Ethernet address associated with an IP address, such as an IP address for Ethernet device 314.

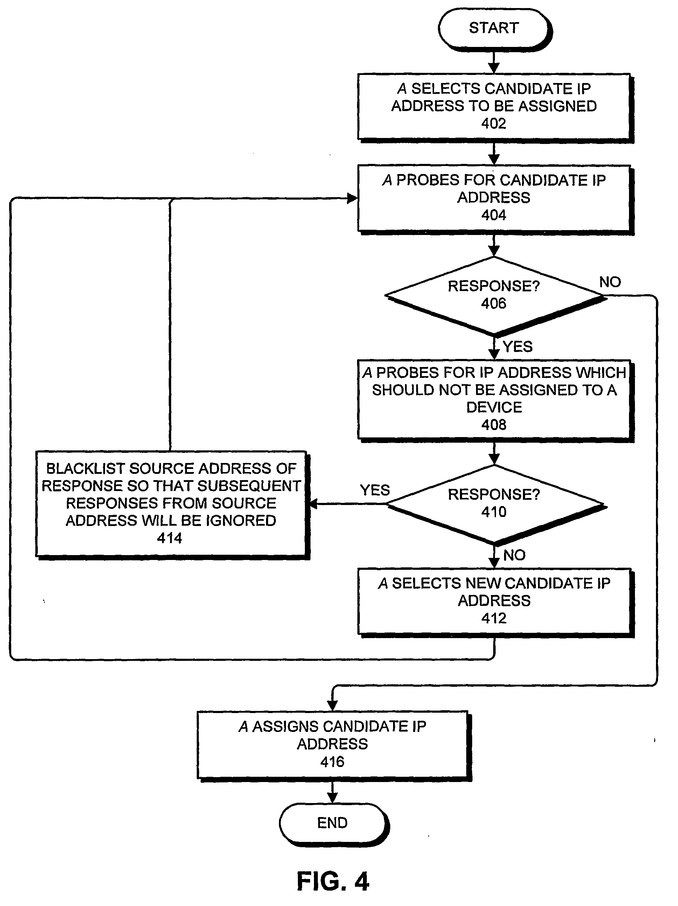

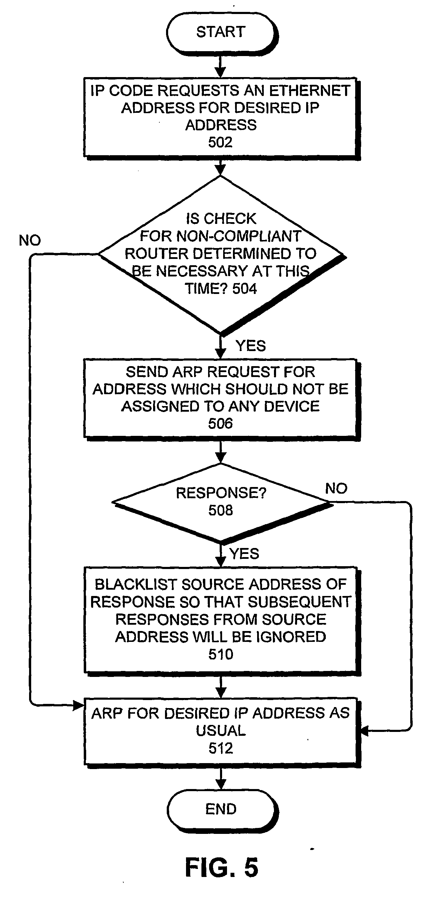

This interference can be handled as is described below with reference to FIGs. 4 and 5.

### Process of Assigning an IP Address

FIG. 4 presents a flow chart illustrating the process of assigning an IP address in accordance with an embodiment of the present invention. The process starts when a node *A* selects a candidate IP address to be assigned (step 402). Next, node *A* performs an initial ARP probe for the candidate IP address (step 404) and waits for a response (step 406).

If there is no response to the initial ARP probe, the candidate IP address is not assigned to any device. In this case, the system assigns the candidate IP address, typically to one of its interfaces (step 416). At this point, the process of assigning the IP address is complete.

If there is a response, the node *A* performs a second ARP probe for a reserved link-local IP address, which should not be assigned to any device, such as the broadcast address 169.254.255.255 and/or 169.254.0.0 (step 408). If there is no response to this second ARP probe, the system infers that no router is responding to ARP requests for link-local IP addresses. Hence, the response to the initial ARP probe validly indicates that the candidate IP address is already assigned to another device. In this case, the system selects a new candidate IP address (step 412) and returns to step 404 to probe for the new candidate IP address.

On the other hand, if there was a response to the second ARP probe in step 4I0, the system infers that a router is incorrectly responding to link-local IP addresses. In this case, the system blacklists the source address of the response so that subsequent responses from the source address will be ignored (step 416). The system then returns to step 404 to probe for the candidate address again.

Note that an ARP probe (which is used to test a candidate IP address) can be differentiated for a normal ARP request because the source address of an ARP probe is all zeros. Hence, it is possible that a router might be correctly configured to not respond to ARP probes, yet still incorrectly respond to normal ARP requests. In this case, the router will not interfere with ARP probes during the process of assigning IP addresses, but may instead interfere with normal ARP requests, in which a node seeks to determine an Ethernet address associated with a valid link-local IP address. This problem can be handled by the process described below with reference to FIG. 5.

### Process of Performing an ARP Request

FIG. 5 presents a flow chart illustrating the process of performing an ARP request in accordance with an embodiment of the present invention. The process starts when IP code in a node A requests an Ethernet address for a desired IP address (step 502). Next, the system determines if (a) this will be the first link-local ARP on this interface to the network since the interface was enabled, or (b) it has been more than some time period since the system last checked for a non-compliant router on this link (step 504). If not, the system ARPs for the address as usual to determine the Ethernet address for the desired IP address (step 512).

On the other hand, if at step 504 the system determines that this will be the first link-local ARP on the interface, or that it is time to re-check this interface, the system first tests to see if there is a router indiscriminately responding to ARP requests on the network associated with the interface. This involves sending an initial ARP request on the network, for an address which should not be assigned to any node (as is described above) (step 506). The system then waits for a response (step 508). If there is no response, the system infers that no router is indiscriminately responding to the link-local ARP requests on the network. In this case, the system ARPs for the desired IP address as usual (step 512).

On the other hand, if there is a response to the ARP request, the system infers that a router is indiscriminately responding to link-local IP addresses. In this case, the system blacklists the source address of the response so that subsequent responses from that source address will be ignored (step 510) when they pertain to link-local IP addresses. The system then proceeds to step 512 and ARPs for the desired IP address as usual.

### Flawed DNS Server

Some DNS servers that reside within home gateways are flawed and can produce incorrect answers or can cause the home gateway to crash. (Note that a DNS server can include any DNS-enabled device including a DNS server, a DNS relay, or a DNS cache.) Such flawed DNS servers assume that if a client performs a PTR-type DNS query, the only possible request the client is making is to perform an IPv4 "reverse lookup" DNS query, translating from an IP address to a name.

An example of a properly-formed IPv4 "reverse-lookup" domain name query is "2.1.168.192.in-addr.arpa." This query and ones like it may be performed by software, or by the user with a DNS utility such as "nslookup". The nslookup command and arguments for this example are:
"nslookup -q=ptr 2.1.168.192.in-addr.arpa." In this example, the DNS query type is PTR and the DNS query is "2.1.168.192.in-addr.arpa." Note that a PTR query is frequently a "reverse-lookup" DNS query, which performs a mapping from an IP address to a corresponding domain name. However, other properly-formed DNS queries are possible even though they may not make any sense. For example, the PTR-type DNS query "2.1.168.192.nonsense." is a properly-formed DNS query, but does not yield any answer records since the top-level domain "nonsense" does not actually exist. Note that the domain "in-addr.arpa" is the proper domain suffix to use when performing a "reverse lookup" DNS query.

Some flawed home gateways examine only the first four labels of the PTR-type DNS query ("labels" in a domain name are the groups of characters separated by periods) and ignore the remainder of the name. In the "2.1.168.192.nonsense." example, the first four labels are "2.1.168.192." Therefore, for these flawed home gateways, the PTR-type DNS query "2.1.168.192.nonsense." is indistinguishable from the PTR-type DNS query "2.1.168.192.in-addr.arpa."

Also note that these same flawed home gateways assume that the first four labels are decimal numbers between 0 and 255. If the first four labels of the PTR-type DNS query are not numbers between 0 and 255, these flawed home gateways crash.

### Detecting a Flawed Internet Router

One embodiment of the present invention detects such flawed home gateways by performing a special DNS query that is constructed to detect the existence of a flaw in the DNS server without crashing it.

For example, the special query which detects a flaw in the home gateway's DNS server is the PTR-type DNS query "2.1.168.192.nonsense.", which produces a NXDOMAIN answer (i.e. domain does not exist) in a properly functioning home gateway without the flaw. However, in home gateways with flawed DNS servers, they will attempt to give a host name in response to the 2.1.168.192.nonsense query, even though the query was not in fact an "in-addr.arpa" name lookup query.

Unfortunately, the PTR-type DNS query "2.1.168.192.nonsense", when directed to a DNS server without the above-mentioned flaw, causes a DNS query to be sent to one of the DNS root name servers. Since in general the only way for a DNS server or relay to know whether or not a particular top-level domain exists is to ask one of the root name servers, every such test query potentially results in a nuisance query being sent to the root name servers.

In one embodiment of the present invention, the special query is constructed so that the DNS server does not communicate with a DNS root name server whether or not the flaw exists.

For example, the special query can be "1.0.0.127.dnsbugtest.1.0.0.127.in-addr.arpa." In this exemplary query, the address "127.0.0.1" is the "loopback address." The loopback address is a special IP address available for use when two pieces of network software on the same machine want to communicate with each other using IP networking mechanisms and programming interfaces, independent of whether conventional (inter-machine) IP networking is available.

Also note that every DNS server is supposed to contain a fixed DNS record which maps "1.0.0.127.in-addr.arpa." to the name "localhost". Hence, any names that are sub-domains of the name "1.0.0.127.in-addr.arpa." are properly-formed and valid, but are names that are known to have no associated DNS records. In other words, "1.0.0.127.dnsbugtest.1.0.0.127.in-addr.arpa." is a legal name, but any queries for that name should yield no results. Therefore, a home gateway with a properly functioning DNS server returns an NXDOMAIN answer (i.e. domain name does not exist) without having to communicate with a DNS root name server to make that determination.

Note that since the last six labels in this PTR-type DNS query is "1.0.0.127.in-addr.arpa.", a home gateway with a properly functioning DNS server will not forward the DNS query to the DNS root name server since the home gateway's DNS server knows that the IP address is a sub-domain of the loopback address. Since sub-domains of the loopback address are not used, the DNS server should respond with an NXDOMAIN answer without communicating with a DNS root name server.

Similarly, a home gateway with the flaw that the special query is constructed to detect does not communicate with a DNS root name server. Recall that a home gateway with a flawed DNS server only uses the first four labels of the PTR-type DNS query, and interprets this PTR-type DNS query as the PTR-type DNS query "1.0.0.127.in-addr.arpa." Since the flawed home gateway's DNS server knows that the correct answer for a PTR-type DNS query for "1.0.0.127.in-addr.arpa." should be "localhost," the home gateway returns the answer "localhost" without communicating with any DNS root name server.

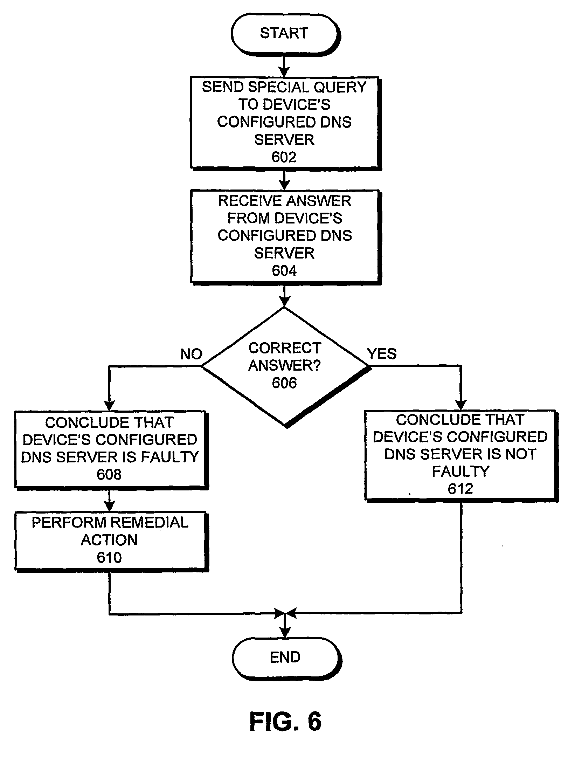

FIG. 6 presents a flow chart illustrating the process of determining if a DNS server is flawed in accordance with an embodiment of the present invention. The process begins when the system sends a special query to the DNS server (step 602). In one embodiment of the present invention, the special query is the PTR-type DNS query
"1.0.0.127.dnsbugtest.1.0.0.127.in-addr.arpa."

Next the system receives an answer from the DNS server (step 604). If the answer is the correct response (step 606 - YES), the system concludes that the DNS server is not flawed (step 612). In one embodiment of the present invention, the correct response is an NXDOMAIN error code, which indicates that a domain name does not exist.

If the answer is incorrect (step 606 - NO), the system concludes that the DNS server is flawed (step 608) and performs a remedial action (step 610).

In one embodiment of the present invention, the remedial action involves taking steps to avoid performing those certain valid DNS queries that are believed to have a high likelihood of crashing that particular device.

In one embodiment of the present invention, the valid DNS queries to be avoided are those used by Wide-Area Bonjour, a networking technology that allows clients to discover network services on a wide-area network.

The foregoing descriptions of embodiments of the present invention have been presented only for purposes of illustration and description. They are not intended to be exhaustive or to limit the present invention to the forms disclosed. Accordingly, many modifications and variations will be apparent to practitioners skilled in the art. Additionally, the above disclosure is not intended to limit the present invention. The scope of the present invention is defined by the appended claims.

## Claims

1. A method for detecting a device such as a router that incorrectly responds to address-resolution-protocol, ARP, probes, comprising:
in a network node (308):
sending a first ARP probe (404) for a link-local IP address wherein the link-local IP address is an IP address to be assigned, selected from a specified range of IP addresses
when a response is received to the first ARP probe (406), sending a second ARP probe (408) for a reserved link-local IP address which should not be assigned to any device; and
when a response is received to the second ARP probe (410), placing the source address of the response a black list and ignoring subsequent ARP responses from the responding device (414).

2. The method of claim 1, wherein sending the second ARP probe involves sending an ARP probe for IPv4 link-local address 169.254.255.255 or an IPv4 link-local address 169.254.0.0.

3. The method of claim 1, wherein a source address of each ARP probe is all zeros.

4. The method of claim 1, wherein when no response is received to the second ARP probe, the method further comprises assigning the link-local IP address.

5. A computer-readable storage medium storing instructions that when executed by a computer cause the computer to perform a method for detecting a device such as a router that incorrectly responds to address-resolution-protocol, ARP, probes, the method comprising:
sending a first ARP probe for a link-local IP address (404) wherein the link-local IP address is an IP address to be assigned selected from a specified range of IP addresses
when a response is received to the first ARP probe (406), sending a second ARP probe (408) for a reserved link-local IP address which should not be assigned to any device; and
when a response is received to the second ARP probe (410), placing the source address of the response on a black list and ignoring subsequent ARP responses from the responding device (414).

6. The computer-readable storage medium of claim 5, wherein sending the second ARP probe involves sending an ARP probe for an IPv4 link-local address 169.254.255.255 or an IPv4 link-local address 169.254.0.0

7. The computer-readable storage medium of claim 5, wherein a source address of each ARP probe is all zeros.

8. The computer-readable storage medium of claim 5, wherein when no response is received to the second ARP probe, the method further comprises assigning the link-local IP address.

9. An apparatus that detects a device such as a router that incorrectly responds to address-resolution-protocol, ARP, probes, comprising:
a network device configured to send a first ARP probe (404) for a link-local IP address wherein the link-local IP address is an IP address to be assigned, selected from a specified range of IP addresses
upon receiving a response to the first ARP probe (406), the network device is configured to send a second ARP probe(408) for a reserved link-local IP address which should not be assigned to any device; and
upon receiving a response to the second ARP probe (410), the network device is configured to place the source address of the response on a black list and ignore subsequent ARP responses from the responding device (414).

10. The apparatus of claim 9, wherein when sending the second ARP probe, the network device is configured to send an ARP probe for an IPv4 link-local address 169.254.255.255 or an IPv4 link-local address 169.254.0.0.

11. The apparatus of claim 9, wherein a source address of each ARP probe is all zeros.

12. The apparatus of claim 9, wherein when no response is received to the second ARP probe, the network device is configured to assign the link-local IP address.

## Patentansprüche

1. Verfahren zum Detektieren einer Vorrichtung, beispielsweise eines Routers, welche falsch auf Address-Resolution-Protocol-, ARP, Anfragen antwortet, umfassend:
in einem Netzwerk-Knoten (308):
Senden einer ersten ARP-Anfrage (404) für eine Link-local-IP-Adresse, wobei die Link-local-IP-Adresse eine zuzuweisende IP-Adresse ist, welche aus einem festgelegten Bereich von IP-Adressen ausgewählt wird,
wenn eine Antwort auf die erste ARP-Anfrage (406) empfangen wird, Senden einer zweiten ARP-Anfrage (408) für eine reservierte Link-local-IP-Adresse, welche keiner Vorrichtung zugewiesen werden sollte; und
wenn eine Antwort auf die zweite ARP-Anfrage (410) empfangen wird, Setzen der Quelladresse der Antwort auf eine schwarze Liste und Ignorieren nachfolgender ARP-Antworten von der antwortenden Vorrichtung (414).

2. Verfahren gemäß Anspruch 1, wobei das Senden der zweiten ARP-Anfrage das Senden einer ARP-Anfrage für die IPv4-Link-local-Adresse 169.254.255.255 oder eine IPv4-Link-local-Adresse 169.254.0.0 umfasst.

3. Verfahren gemäß Anspruch 1, wobei eine Quelladresse jeder ARP-Anfrage nur aus Nullen besteht.

4. Verfahren gemäß Anspruch 1, wobei, wenn keine Antwort auf die zweite ARP-Anfrage empfangen wird, das Verfahren weiterhin das Zuweisen der Link-local-IP-Adresse umfasst.

5. Computerlesbares Speichermedium, welches Instruktionen speichert, welche bei ihrer Ausführung durch einen Computer den Computer veranlassen, ein Verfahren zum Detektieren einer Vorrichtung, beispielsweise eines Routers, welche falsch auf Address-Resolution-Protocol-, ARP, Anfragen antwortet, auszuführen, wobei das Verfahren umfasst:
Senden einer ersten ARP-Anfrage (404) für eine Link-local-IP-Adresse, wobei die Link-local-IP-Adresse eine zuzuweisende IP-Adresse ist, welche aus einem festgelegten Bereich von IP-Adressen ausgewählt wird,
wenn eine Antwort auf die erste ARP-Anfrage (406) empfangen wird, Senden einer zweiten ARP-Anfrage (408) für eine reservierte Link-local-IP-Adresse, welche keiner Vorrichtung zugewiesen werden sollte; und
wenn eine Antwort auf die zweite ARP-Anfrage (410) empfangen wird, Setzen der Quelladresse der Antwort auf eine schwarze Liste und Ignorieren nachfolgender ARP-Antworten von der antwortenden Vorrichtung (414).

6. Computerlesbares Speichermedium gemäß Anspruch 5, wobei das Senden der zweiten ARP-Anfrage das Senden einer ARP-Anfrage für die IPv4-Link-local-Adresse 169.254.255.255 oder eine IPv4-Link-local-Adresse 169.254.0.0 umfasst.

7. Computerlesbares Speichermedium gemäß Anspruch 5, wobei eine Quelladresse jeder ARP-Anfrage nur aus Nullen besteht.

8. Computerlesbares Speichermedium gemäß Anspruch 5, wobei, wenn keine Antwort auf die zweite ARP-Anfrage empfangen wird, das Verfahren weiterhin das Zuweisen der Link-local-IP-Adresse umfasst.

9. Gerät, welches eine Vorrichtung, beispielsweise einen Router, detektiert, welche falsch auf Address-Resolution-Protocol-, ARP, Anfragen antwortet, umfassend:
eine Netzwerk-Vorrichtung, welche eingerichtet ist zum Senden einer ersten ARP-Anfrage (404) für eine Link-local-IP-Adresse, wobei die Link-local-IP-Addresse eine zuzuweisende IP-Adresse ist, welche aus einem festgelegten Bereich von IP-Adressen ausgewählt wird;
nach Empfangen einer Antwort auf die ersten ARP-Anfrage (406) wird die Netzwerk-Vorrichtung eingerichtet zum Senden einer zweiten ARP-Anfrage (408) für eine reservierte Link-local-IP-Adresse, welche keiner Vorrichtung zugewiesen werden sollte; und
nach Empfangen einer Antwort auf die zweite ARP-Anfrage (410) wird die Netzwerk-Vorrichtung eingerichtet zum Setzen der Quelladresse der Antwort auf eine schwarze Liste und Ignorieren nachfolgender ARP-Antworten von der antwortenden Vorrichtung (141).

10. Gerät gemäß Anspruch 9, wobei beim Senden der zweiten ARP-Anfrage die Netzwerk-Vorrichtung eingerichtet wird zum Senden einer ARP-Anfrage für eine IPv4- Link-local-Adresse 169.254.255.255 oder eine IPv4 Link-local-Adresse 169.254.0.0.

11. Gerät gemäß Anspruch 9, wobei eine Quelladresse jeder ARP-Anfrage nur aus Nullen besteht.

12. Gerät nach Anspruch 9, wobei, wenn keine Antwort auf die zweite ARP-Anfrage empfangen wird, die Netzwerk-Vorrichtung eingerichtet wird zum Zuweisen der Link-local-IP-Adresse.

## Revendications

1. Un procédé de détection d'un dispositif tel qu'un routeur qui répond de façon incorrecte à des sondes d'un protocole de résolution d'adresse, ARP, comprenant :
dans un noeud de réseau (308) :
l'envoi d'une première sonde ARP (404) pour une adresse IP locale de liaison, l'adresse IP locale de liaison étant une adresse IP à attribuer sélectionnée dans une plage spécifiée d'adresses IP,
lorsqu'une réponse à la première sonde ARP (406) est reçue, l'envoi d'une seconde sonde ARP (408) pour une adresse IP locale de liaison réservée qui ne doit être attribuée à aucun dispositif ; et
lorsqu'une réponse à la seconde sonde ARP (410) est reçue, le placement de l'adresse source de la réponse sur une liste noire et l'ignorance des réponses ARP subséquentes en provenance du dispositif qui a répondu (414).

2. Le procédé de la revendication 1, dans lequel l'envoi de la seconde sonde ARP implique l'envoi d'une sonde ARP pour une adresse IPv4 locale de liaison 169.254.255.255 ou une adresse IPv4 locale de liaison 169.254.0.0.

3. Le procédé de la revendication 1, dans lequel une adresse source de chaque sonde ARP est entièrement formée de zéros.

4. Le procédé de la revendication 1, dans lequel lorsqu'aucune réponse n'est reçue à la seconde sonde ARP, le procédé comprend en outre l'attribution de l'adresse IP locale de liaison.

5. Un support de stockage lisible par ordinateur stockant des instructions qui lorsqu'elles sont exécutées par un calculateur font en sorte que le calculateur mette en oeuvre un procédé de détection d'un dispositif tel qu'un routeur qui répond de façon incorrecte à des sondes d'un protocole de résolution d'adresse, ARP, le procédé comprenant :
l'envoi d'une première sonde ARP pour une adresse IP locale de liaison (404), l'adresse IP locale de liaison étant une adresse IP à attribuer sélectionnée dans une plage spécifiée d'adresses IP,
lorsqu'une réponse à la première sonde ARP (406) est reçue, l'envoi d'une seconde sonde ARP (408) pour une adresse IP locale de liaison réservée qui ne doit être attribuée à aucun dispositif ; et
lorsqu'une réponse à la seconde sonde ARP (410) est reçue, le placement de l'adresse source de la réponse sur une liste noire et l'ignorance des réponses ARP subséquentes en provenance du dispositif qui a répondu (414).

6. Le support de stockage lisible par ordinateur de la revendication 5, dans lequel l'envoi de la seconde sonde ARP implique l'envoi d'une sonde ARP pour une adresse IPv4 locale de liaison 169.254.255.255 ou une adresse IPv4 locale de liaison 169.254.0.0.

7. Le support de stockage lisible par ordinateur de la revendication 5, dans lequel une adresse source de chaque sonde ARP est entièrement formée de zéros.

8. Le support de stockage lisible par ordinateur de la revendication 5, dans lequel lorsqu'aucune réponse n'est reçue à la seconde sonde ARP, le procédé comprend en outre l'attribution de l'adresse IP locale de liaison.

9. Un dispositif qui détecte un dispositif tel qu'un routeur qui répond de façon incorrecte à des sondes de protocole de résolution d'adresse, ARP, comprenant :
un dispositif de réseau configuré pour envoyer une première sonde ARP (404) pour une adresse IP locale de liaison, l'adresse IP locale de liaison étant une adresse IP à attribuer sélectionnée dans une plage spécifiée d'adresses IP ;
à réception d'une réponse à la première sonde ARP (406), le dispositif de réseau est configuré pour envoyer une seconde sonde ARP (408) pour une adresse IP locale de liaison réservée qui ne doit être attribuée à aucun dispositif ; et
à réception d'une réponse à la seconde sonde ARP (410), le dispositif de réseau est configuré pour placer l'adresse source de la réponse sur une liste noire et ignorer les réponses ARP subséquentes en provenance du dispositif ayant répondu (414).

10. Le dispositif de la revendication 9, dans lequel, lors de l'envoi de la seconde sonde ARP, le dispositif de réseau est configuré pour envoyer une sonde ARP pour une adresse IPv4 locale de liaison 169.254.255.255 ou une adresse IPv4 locale de liaison 169.254.0.0.

11. Le dispositif de la revendication 9, dans lequel une adresse source de chaque sonde ARP est formée entièrement de zéros.

12. Le dispositif de la revendication 9, dans lequel lorsqu'aucune réponse n'est reçue à la seconde sonde ARP, le dispositif de réseau est configuré pour attribuer l'adresse IP locale de liaison.
